# EUROPEAN PATENT APPLICATION

(11) **EP 4 838 160 A1**
(43) Date of publication of application: **11.11.2026**
(21) Application number: 24936597.4
(22) Date of filing: 21.08.2024
(51) Int. Cl.: F26B 9/06, F26B 23/04, F26B 25/00

(54) **BATTERY BAKING DEVICE AND CONTROL METHOD THEREFOR**

(30) Priority: 25.04.2024 CN 202410502755
(71) Applicant: Contemporary Amperex Technology Co., Limited, Ningde, Fujian 352100 (CN)
(72) Inventor: TAO, Guanghua, Ningde, Fujian 352100 (CN); LUO, Hongzhang, Ningde, Fujian 352100 (CN)
(74) Representative: Lorenz Seidler Gossel Part. mbB
(86) International application number: PCT/CN2024/113771
(87) International publication number: WO 2025/222704

(57) **Abstract**

The present disclosure relates to a battery baking device and a control method therefor. The battery baking device comprises a controller, probes, and probe bases corresponding to the probes. The probes include auxiliary probes and additional probes. The auxiliary probes are configured to be in contact with the corresponding probe bases to form an auxiliary probe operating circuit. The additional probes are configured to be in contact with the corresponding probe bases to form an additional probe operating circuit. The controller is configured to, on the basis of a heating instruction, control to supply power to the auxiliary probes in the battery baking device, and when the auxiliary probes are powered on, control to supply power to the additional probes in the battery baking device. The conductor contact length between the auxiliary probes and the corresponding probe bases is shorter than that between the additional probes and the corresponding probe bases. In the device, the relatively short auxiliary probes are powered on such that the auxiliary probes are in effective contact with the corresponding probe bases, and the relatively long additional probes are also in effective contact with the corresponding probe bases under the action of pressure, thereby reducing failures caused by poor contact between probes and bases, and reducing the device failure rate.

## Description

### CROSS-REFERENCE TO RELATED APPLICATIONS

This disclosure claims priority of the Chinese Patent Application No. 2024105027555 filed on April 25, 2024 and entitled "BATTERY BAKING DEVICE AND CONTROL METHOD THEREFOR", which is incorporated herein by reference in its entirety.

### TECHNICAL FIELD

This disclosure relates to the field of circuit technologies, in particular to a battery baking device and a control method therefor.

### BACKGROUND

In a battery production process, batteries need to be dried to remove moisture in the batteries.

In the related art, battery baking devices are typically used to heat batteries to achieve drying of the batteries. However, battery baking devices in the related art suffer from the problems of high failure rate and insufficient safety.

### SUMMARY

In view of this, it is necessary to provide a battery baking device, a control method, apparatus, and device for a battery baking device, and a storage medium to address the above technical problems, which can reduce failures caused by poor contact between probes and bases, reduce device failure rate, and improve device safety.

According to a first aspect, an embodiment of this disclosure provides a battery baking device, including a controller, probes, and probe bases corresponding to the probes. The probes include auxiliary probes and other probes. The auxiliary probes are configured to come into contact with the probe bases to form auxiliary probe operating circuits; and the other probes are configured to come into contact with the probe bases to form other probe operating circuits. The controller is configured to control power supply to the auxiliary probes in the battery baking device based on a heating instruction, and control power supply to the other probes in the battery baking device when the auxiliary probes are energized. Lengths of conductors where the auxiliary probes are in contact with the probe bases are less than lengths of conductors where the other probes are in contact with the probe bases.

In this embodiment of this disclosure, when the auxiliary probes are energized, it indicates that the auxiliary probes are in effective contact with the probe bases. Since the lengths of the conductors where the auxiliary probes are in contact with the probe bases are less than the lengths of the conductors where the other probes are in contact with the probe bases, when the auxiliary probes are in effective contact with the probe bases, all the other probes are also in effective contact with the probe bases under pressure, thereby reducing failures caused by poor contact between the probes and the bases, reducing the device failure rate, and simultaneously improving the device safety.

In an embodiment, the battery baking device further includes: a probe plate and a base plate; both the auxiliary probes and the other probes are arranged on the probe plate; and the probe bases are arranged on the base plate.

In this embodiment of this disclosure, scattered probes are uniformly fixed to the probe plate, and scattered probe bases are uniformly fixed to the base plate, thereby improving the stability of positions of the probes and the probe bases, facilitating the control on integral movement of all probes or all probe bases at one time, and improving the convenience and high efficiency of movement control.

In an embodiment, the auxiliary probes are arranged at edge positions of the probe plate; and the other probes are arranged at central positions of the probe plate.

In this embodiment of this disclosure, the shorter auxiliary probes are arranged at an edge of the probe plate, and the longer other probes are arranged at the center of the probe plate, so that the auxiliary probes at the edge are in effective contact with the probe bases, which promotes effective contact between all the other probes and the probe bases, thereby improving the effectiveness of contact between the other probes and the probe bases.

In an embodiment, the auxiliary probes on the probe plate are arranged around the other probes.

In this embodiment of this disclosure, the arrangement of the auxiliary probes around the other probes enables the auxiliary probes to be distributed in a dispersed manner, avoiding error signals caused by uneven stress in a single orientation, thereby improving the reliability of the corresponding formed auxiliary signals.

In an embodiment, the probe bases each include a conductive groove, and both the auxiliary probes and the other probes come into contact with the probe bases by being inserted into the corresponding conductive grooves.

In this embodiment of this disclosure, electrical connection of the auxiliary probes and the other probes is achieved through the conductive grooves in the probe bases. Positions of the probes can be accurately locked and controlled in the conductive grooves, reducing the influence of external interference on alignment offset, improving the accuracy of alignment between the probes and the bases, and simultaneously improving the anti-interference capability of the device.

In an embodiment, the battery baking device further includes a first power source for supplying power to the auxiliary probes and a second power source for supplying power to the other probes; and a supply voltage for the first power source is less than a supply voltage for the second power source.

In this embodiment of this disclosure, the first power source uses a smaller supply voltage to supply power to the auxiliary probes, and the second power source uses a larger supply voltage to supply power to the other probes. This reduces heat generation of the auxiliary probe operating circuits caused by the larger supply voltage while meeting the requirements of different operating circuits, thereby correspondingly reducing arcing between the probes and between the probes and bases, and improving the device safety.

In an embodiment, at least two probe bases are connected by a heating wire, and the at least two probe bases form a heating circuit after coming into contact with the other probes.

In this embodiment of this disclosure, the heating wire is additionally provided between the probe bases to form a heating circuit after the probes are in aligned contact with the bases, providing a baking function without introducing other heating devices, thereby simplifying the overall structure of the device.

In an embodiment, the probes each include a floating structure and a conductive body connected to the floating structure; the floating structure is configured to drive the conductive body to extend and retract under an external force; and the conductive body is configured to come into contact with the probe base.

In this embodiment of this disclosure, the extension and retraction property of the floating structure is utilized to achieve close contact between the probe and the base, which helps to achieve effective contact between the probe and the base, reduces failures caused by poor contact between the probe and the base, and reduces the device failure rate.

According to a second aspect, an embodiment of this disclosure further provides a control method for a battery baking device, including:
controlling power supply to auxiliary probes in the battery baking device in response to a heating instruction of the battery baking device; and
controlling power supply to other probes in the battery baking device when the auxiliary probes are energized, where lengths of conductors where the auxiliary probes are in contact with probe bases are less than lengths of conductors where the other probes are in contact with the probe bases.

In this embodiment of this disclosure, power is first supplied to the auxiliary probes, and then power is supplied to the other probes when the auxiliary probes are energized. Since the lengths of the conductors where the auxiliary probes are in contact with the probe bases are less than the lengths of the conductors where the other probes are in contact with the probe bases, energization of the shorter auxiliary probes indicates effective contact between the auxiliary probes and the probe bases, and the longer other probes are also in effective contact with the probe bases under pressure, thereby reducing failures caused by poor contact between the probes and the bases, reducing the device failure rate, and simultaneously improving the device safety.

In an embodiment, a supply voltage for the auxiliary probes is less than a supply voltage for the other probes.

In an embodiment of this disclosure, a smaller supply voltage is used to supply power to the auxiliary probes, and a larger supply voltage is used to supply power to the other probes. This reduces arcing between the probes and between the probes and bases caused by heat generation of the auxiliary probe operating circuits while meeting the requirements of different operating circuits, thereby reducing the device failure rate, and improving the device safety.

In an embodiment, before the controlling power supply to other probes in the battery baking device, the method further includes:
acquiring an electrical signal of auxiliary probe operating circuits, where the auxiliary probe operating circuits represent loops formed after the auxiliary probes come into contact with the probe bases; and
determining an energization state of the auxiliary probes according to the electrical signal of the auxiliary probe operating circuits.

In this embodiment of this disclosure, the electrical signal of the auxiliary probe operating circuits may be used to characterize the energization state of the auxiliary probes. By acquiring the electrical signal of the auxiliary probe operating circuits before controlling power supply to the other probes in the battery baking device to determine the energization state of the auxiliary probes, the device failure rate caused by directly supplying power to the other probes can be greatly reduced, and the electrical signal is convenient to read, which can correspondingly improve the efficiency.

In an embodiment, determining the energization state of the auxiliary probes according to the electrical signal of the auxiliary probe operating circuit includes:
determining that the auxiliary probes are energized when the electrical signal is at a high level; and
determining that the auxiliary probes fail to be energized when the electrical signal is at a low level.

In this embodiment of this disclosure, the high level and low level of the auxiliary probe operating circuits can accurately reflect the energization state of the auxiliary probes, and the signal acquisition process is simple and easy to implement, which overall improves the accuracy and high efficiency of determining the energization state of the auxiliary probes.

In an embodiment, the method further includes:
controlling the battery baking device to issue an alarm when the auxiliary probes fail to be energized.

In this embodiment of this disclosure, when the auxiliary probes fail to be energized, an alarm is issued directly, which can prompt operators to troubleshoot problems in a timely manner, thereby improving the orderliness and safety of device operation.

In an embodiment, the method further includes:
acquiring an energization state of the other probes upon controlling power supply to the other probes; and
controlling the battery baking device to issue an alarm when the other probes fail to be energized.

In this embodiment of this disclosure, continuous monitoring for the energization state of the other probes is achieved. When the other probes fail to be energized, an alarm is issued directly, which can prompt operators to troubleshoot problems in a timely manner, thereby improving the orderliness and safety of device operation.

In an embodiment, acquiring an energization state of the other probes includes:
acquiring an electrical signal of other probe operating circuits, where the other probe operating circuits represent loops formed after the other probes come into contact with the probe bases; and
determining the energization state of the other probes according to the electrical signal of the other probe operating circuits.

In this embodiment of this disclosure, the electrical signal of the other probe operating circuits may be used to characterize the energization state of the other probes. By acquiring the electrical signal of the other probe operating circuits after controlling power supply to the other probes in the battery baking device to determine the energization state of the other probes, continuous monitoring for the battery baking device can be achieved, and the electrical signal is convenient to read, which can correspondingly improve the efficiency.

In an embodiment, before the controlling power supply to auxiliary probes in the battery baking device, the method further includes:
first controlling the other probes to come into contact with probe bases at corresponding positions, and then controlling the auxiliary probes to come into contact with probe bases at corresponding positions.

In this embodiment of this disclosure, alignment between the probes and the bases is controlled, alignment time is reduced, and control efficiency is correspondingly improved.

According to a third aspect, an embodiment of this disclosure further provides a control apparatus for a battery baking device, including:
a heating response module, configured to control power supply to auxiliary probes in the battery baking device in response to a heating instruction of the battery baking device; and
a power supply control module, configured to control power supply to other probes in the battery baking device when the auxiliary probes are energized, where lengths of conductors where the auxiliary probes are in contact with probe bases are less than lengths of conductors where the other probes are in contact with the probe bases.

According to a fourth aspect, an embodiment of this disclosure further provides a computer device, including a memory and a processor, where the memory stores a computer program, and the processor implements the steps of the control method for a battery baking device provided in any embodiment according to the first aspect when executing the computer program.

According to a fifth aspect, an embodiment of this disclosure further provides a computer-readable storage medium having a computer program stored thereon, where the computer program implements the steps of the control method for a battery baking device provided in any embodiment according to the first aspect when executed by a processor.

According to a sixth aspect, an embodiment of this disclosure further provides a computer program product including a computer program, where the computer program implements the steps of the control method for a battery baking device provided in any embodiment according to the first aspect when executed by a processor.

The above description is only an overview of the technical solutions of this disclosure. To understand the technical means of this disclosure more clearly so that the technical means can be implemented in accordance with the content of the specification, and to make the above and other objectives, features, and advantages of this disclosure more obvious and understandable, specific embodiments of this disclosure are exemplified below.

### BRIEF DESCRIPTION OF DRAWINGS

By reading the detailed description of the preferred embodiments below, various other advantages and benefits will become clear to those of ordinary skill in the art. The drawings are only for the purpose of illustrating the preferred embodiments and are not to be considered as limiting this disclosure. In all the drawings, the same reference numerals are used to denote the same components. In the drawings:
FIG. 1 is a schematic structural diagram of a battery baking device according to an embodiment;
FIG. 2 is a schematic diagram of a partial structure of a battery baking device according to another embodiment;
FIG. 3 is a schematic diagram of a partial structure of a battery baking device according to another embodiment;
FIG. 4 is a schematic structural diagram of a battery baking device according to another embodiment;
FIG. 5 is a schematic structural diagram of a probe according to an embodiment;
FIG. 6 is a schematic flowchart of a control method for a battery baking device according to an embodiment;
FIG. 7 is a schematic flowchart of a control method for a battery baking device according to another embodiment;
FIG. 8 is a schematic flowchart of determining an energization state of auxiliary probes according to an embodiment;
FIG. 9 is a schematic flowchart of a control method for a battery baking device according to another embodiment;
FIG. 10 is a schematic flowchart of acquiring an energization state of other probes according to an embodiment;
FIG. 11 is a schematic flowchart of a control method for a battery baking device according to another embodiment; and
FIG. 12 is a structural block diagram of a control apparatus for a battery baking device according to an embodiment.

### Description of reference numerals:

100. battery baking device;
110. controller;
120. probe;
121. auxiliary probe;
122. other probes;
130. probe base;
131. conductive groove;
140. probe plate;
150. base plate;
160. first power source;
170. second power source;
180. heating wire;
1200. control apparatus for battery baking device;
1201. heating response module; and
1202. power supply control module.

### DESCRIPTION OF EMBODIMENTS

To make the objectives, technical solutions, and advantages of this disclosure clearer, this disclosure is further described in detail below in conjunction with the drawings and embodiments. It should be understood that the specific embodiments described herein are only used to explain this disclosure and are not used to limit this disclosure.

Unless otherwise defined, all technical and scientific terms used herein have the same meaning as commonly understood by those skilled in the technical field to which this disclosure belongs; the terms used herein are only for the purpose of describing specific embodiments and are not intended to limit this disclosure; and the terms "include", "comprise", and any variations thereof in the specification and claims of this disclosure and the above drawings are intended to cover non-exclusive inclusion.

Reference to "embodiment" herein means that a specific feature, structure, or characteristic described in conjunction with this embodiment may be included in at least one embodiment of this disclosure. The appearance of the phrase in various positions in the specification does not necessarily refer to the same embodiment, nor is it an independent or alternative embodiment mutually exclusive with other embodiments. It is explicitly and implicitly understood by those skilled in the art that the embodiments described herein may be combined with other embodiments.

In the description of the embodiments of this disclosure, the term "and/or" is merely a description of an association relationship between associated objects, indicating that three relationships may exist. For example, A and/or B may indicate the following three cases: only A exists, both A and B exist, and only B exists. In the description of the embodiments of this disclosure, the term "multiple" refers to two or more (including two), unless otherwise clearly and specifically defined.

In a battery production process, batteries need to be dried to remove moisture in the batteries.

In actual production, battery baking devices are typically used to heat batteries to achieve drying of the batteries. In the related art, a battery baking device includes heating probes and probe bases. The heating probes may be aligned with the base probes so that the heating probes come into contact with the probe bases to form heating circuits, and electric heating is achieved under the action of a power source.

However, due to the influence of the probe size errors or assembly errors, after the probes are aligned with the bases in the related art, there is often a case where some probes are in effective contact with the bases and gaps exist between some probes and the bases, resulting in poor contact between the probes and the bases.

In the above case, if power is directly supplied to the heating probes, the heating circuits operate and release heat, causing arcing between the probes with gaps and the bases or between adjacent probes. In a pure oxygen environment, it is easy to cause fire due to vacuum discharge, damaging the battery baking device and battery, and subsequently causing safety accidents.

In view of this, an embodiment of this disclosure provides a control method for a battery baking device. Since lengths of conductors where auxiliary probes are in contact with probe bases are less than lengths of conductors where other probes are in contact with the probe bases, power is supplied to the other probes after the auxiliary probes are energized, which improves effective contact between the other probes and the probe bases, and reduces failures caused by poor contact between the probes and the bases, thereby achieving the technical effect of reducing the device failure rate and simultaneously improving the device safety.

The control method for a battery baking device provided in this embodiment of this disclosure can be applied to a battery baking device. Therefore, before the process of the control method for a battery baking device is described in detail, the battery baking device provided in this embodiment of this disclosure is first described.

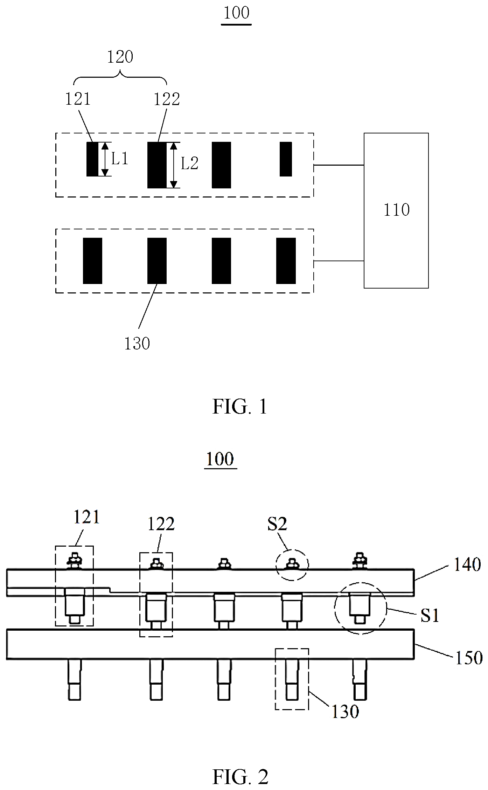

As shown in FIG. 1, in an embodiment, an embodiment of this disclosure provides a battery baking device 100, including:
a controller 110, probes 120, and probe bases 130 corresponding to the probes 120.

The probes 120 include auxiliary probes 121 and other probes 122. The auxiliary probes 121 are configured to come into contact with the probe bases 130 to form auxiliary probe operating circuits; and the other probes 122 are configured to come into contact with the probe bases 130 to form other probe operating circuits. The controller 110 is configured to control power supply to the auxiliary probes 121 in the battery baking device 100 based on a heating instruction, and control power supply to the other probes 122 in the battery baking device 100 when the auxiliary probes 121 are energized. Lengths of conductors where the auxiliary probes 121 are in contact with the probe bases 130 are less than lengths of conductors where the other probes 122 are in contact with the probe bases 130.

The auxiliary probes 121, the other probes 122, and the probe bases 130 are all conductor structures. The battery baking device 100 includes at least two auxiliary probes 121 and at least two other probes 122, and correspondingly includes at least four probe bases 130 to assist the formation of loops after the auxiliary probes 121 come into contact with the probe bases 130. The probe bases 130 that are correspondingly in contact with the auxiliary probes 121 are electrically connected to each other, and form auxiliary probe operating circuits after coming into contact with at least two auxiliary probes 121. The probe bases 130 that are correspondingly in contact with the other probes 122 are electrically connected to each other, and form other probe operating circuits after coming into contact with at least two other probes 122.

For example, as shown in FIG. 1, the controller 110 may be connected to the auxiliary probes 121, the other probes 122, and the probe bases 130. The controller 110 may further be connected to the auxiliary probes 121 and the other probes 122 without being connected to the probe bases 130, or may be connected to the probe bases 130 without being connected to the auxiliary probes 121 or the other probes 122.

In the battery baking device 100, the probes 120 and the probe bases 130 are arranged opposite each other. Under the control of the controller 110, the auxiliary probes 121 and the other probes 122 can move toward the probe bases 130, and/or the probe bases 130 can move toward the auxiliary probes 121 and the other probes 122, so that the auxiliary probes 121 and the other probes 122 come into contact with the probe bases 130 to form loops, thereby realizing the functions of the corresponding loops.

The loops formed by the auxiliary probes 121 are the auxiliary probe operating circuits, which may be used to provide an auxiliary signal that characterizes an energization state of the auxiliary probes 121. The other probes 122 may include probes with various functions, including not only heating probes for realizing a heating function, but also probes for realizing other functions, such as communication probes for communication with other devices. For example, the probe bases 130 in contact with the heating probes are connected by heating wires and are configured to form heating circuits with the heating probes when the heating probes are energized; and the probe bases 130 in contact with communication probes are connected by communication modules and are configured to form communication circuits with the communication probes when the communication probes are energized.

After a heating instruction is triggered, the controller 110 controls power supply to the auxiliary probes 121 in the battery baking device 100 in response to the heating instruction, and detects the energization state of the auxiliary probes 121, so as to control power supply to the other probes 122 in the battery baking device 100 when the auxiliary probes 121 are energized.

In some embodiments, the heating instruction may be triggered actively or passively. For example, after alignment of the probes and the bases is completed, an operator may start the battery baking device 100 to actively trigger the heating instruction. Alternatively, the controller 110 may passively trigger the heating instruction after detecting that the probes and the bases are aligned. These embodiments of this disclosure do not impose any specific limitation on a triggering manner of the heating instruction.

As shown in FIG. 1, the auxiliary probes 121 and the other probes 122 match specifications of the probe bases 130 to be aligned with. Lengths L1 of conductors where the auxiliary probes 121 are in contact with the probe bases 130 are less than lengths L2 of conductors where the other probes 122 are in contact with the probe bases 130. In view of this, when the auxiliary probes 121 are energized, it indicates that the auxiliary probes 121 are in effective contact with the probe bases 130. Since L1 is less than L2, when the auxiliary probes 121 are in effective contact with the probe bases 130, it indicates that all the other probes 122 are also in effective contact with the probe bases 130 under pressure. Therefore, when the auxiliary probes 121 are energized, the controller 110 controls power supply to the other probes 122 in the battery baking device 100.

In these embodiments of this disclosure, the provided battery baking device includes a controller, probes, and probe bases corresponding to the probes. The probes include auxiliary probes and other probes. The auxiliary probes are configured to come into contact with the probe bases to form auxiliary probe operating circuits; and the other probes are configured to come into contact with the probe bases to form other probe operating circuits. The controller is configured to control power supply to the auxiliary probes in the battery baking device based on a heating instruction, and control power supply to the other probes in the battery baking device when the auxiliary probes are energized. Lengths of conductors where the auxiliary probes are in contact with the probe bases are less than lengths of conductors where the other probes are in contact with the probe bases. In the above device, when the auxiliary probes are energized, it indicates that the auxiliary probes are in effective contact with the probe bases. Since the lengths of the conductors where the auxiliary probes are in contact with the probe bases are less than the lengths of the conductors where the other probes are in contact with the probe bases, when the auxiliary probes are in effective contact with the probe bases, all the other probes are also in effective contact with the probe bases under pressure, thereby reducing failures caused by poor contact between the probes and the bases, reducing the device failure rate, and simultaneously improving the device safety.

To improve the stability of positions of the probes 120 and the probe bases 130, in an embodiment, as shown in FIG. 2, the above battery baking device 100 further includes a probe plate 140 and a base plate 150. Both the auxiliary probes 121 and the other probes 122 are arranged on the probe plate 140, and the probe bases 130 are arranged on the base plate 150.

The probe plate 140 and the base plate 150 are insulating substrates. The probe plate 140 is configured to bear the probes 120, and the base plate 150 is configured to bear the probe bases 130.

In some embodiments, the auxiliary probes 121 and the other probes 122 may be fixed to a surface of the probe plate 140, or inserted into the probe plate 140, and electrically connected to the controller 110 and other devices/modules through circuits on the surface/inside the probe plate 140. The probe bases 130 may be arranged on a surface of the base plate 150, or embedded in the base plate 150 through one side surface, come into contact with the auxiliary probes 121 or the other probes 122 through a conductor part exposed on the surface of the base plate 150, and be electrically connected to heating wires and other devices/modules through circuits on the surface/inside the base plate 150.

For example, as shown in FIG. 2, the auxiliary probes 121 and the other probes 122 may penetrate through the probe plate 140 and be fixed to the probe plate 140. The auxiliary probes 121 and the other probes 122 penetrate through the probe plate 140, and the probe plate 140 can divide the auxiliary probes 121 and the other probes 122 into two parts, which are respectively a conductor part S1 in contact with the probe bases 130 and a conductor part S2 not in contact with the probe bases 130. S2 may be configured to be electrically connected to the controller 110 and other devices/modules.

During an alignment process of the probes and the bases, the probe plate 140 and/or the base plate 150 can be moved to press the probe plate 140 and the base plate 150 together, to achieve aligned contact between the probes 120 on the probe plate 140 and the probe bases 130 on the base plate 150, thereby forming loops.

In these embodiments of this disclosure, the provided battery baking device further includes a probe plate and a base plate. Both the auxiliary probes and the other probes are arranged on the probe plate; and the probe bases are arranged on the base plate. In the above device, scattered probes are uniformly fixed to the probe plate, and scattered probe bases are uniformly fixed to the base plate, thereby improving the stability of positions of the probes and the probe bases, facilitating the control on integral movement of all probes or all probe bases at one time, and improving the convenience and high efficiency of movement control.

To improve the effectiveness of contact between the other probes 122 and the probe bases 130, in an embodiment, the auxiliary probes 121 are arranged at edge positions of the probe plate 140; and the other probes 122 are arranged at central positions of the probe plate 140.

The edge positions of the probe plate 140 are used to characterize regions close to an edge of the probe plate 140. The central positions of the probe plate 140 are used to characterize regions close to a center of the probe plate 140.

For example, the edge positions of the probe plate 140 may be regions at a distance less than a preset distance L1 from the edge of the probe plate 140. The central positions of the probe plate 140 may be regions at a distance less than a preset distance L2 from the center of the probe plate 140.

In some embodiments, the auxiliary probes 121 may be arranged at edge positions in any direction of the probe plate 140.

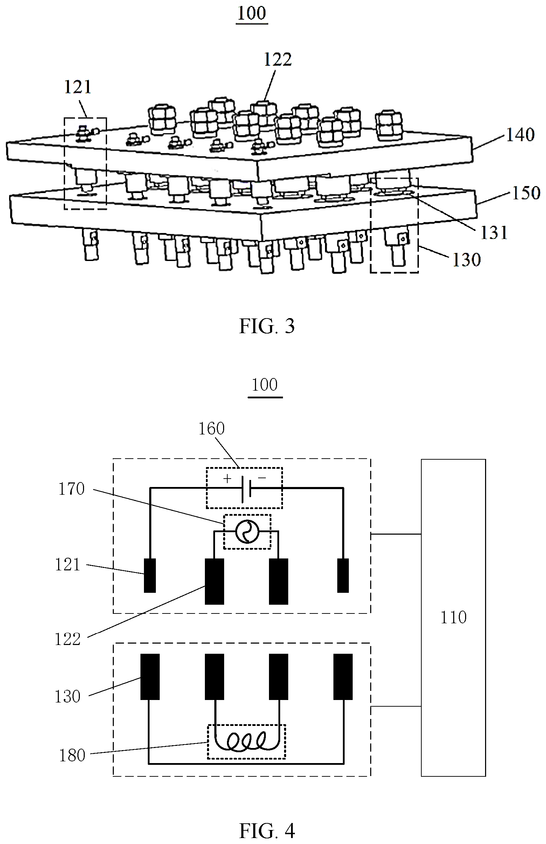

For example, as shown in FIG. 3, the auxiliary probes 121 are arranged at edge positions on one side edge of the probe plate 140, and multiple auxiliary probes 121 are sequentially arranged along an extension direction of the edge.

It should be noted that during a pressing process of the probe plate 140 and the base plate 150, the influence of an uneven external force easily causes a situation where middle portions of plates are already in close contact but the edges are still not in contact, resulting in edge warping. By arranging the auxiliary probes 121 at the edge positions of the probe plate 140 and arranging the other probes 122 at the central positions of the probe plate 140, when the auxiliary probes 121 are energized, it indicates that the edge positions have been in close contact, which is more likely to cause the central positions to also be in close contact, thereby achieving effective contact.

In these embodiments of this disclosure, the auxiliary probes are arranged at the edge positions of the probe plate, and the other probes are arranged at the central positions of the probe plate. In the above device, the shorter auxiliary probes are arranged at the edge of the probe plate, and the longer other probes are arranged at the center of the probe plate, so that the auxiliary probes at the edge are in effective contact with the probe bases, which promotes effective contact between all the other probes and the probe bases, thereby improving the effectiveness of contact between the other probes and the probe bases.

In some embodiments, the auxiliary probes 121 on the probe plate 140 are arranged around the other probes 122.

In some embodiments, the arrangement of the auxiliary probes 121 around the other probes 122 may include two arrangement manners, namely half-surrounding arrangement and full-surrounding arrangement.

For example, when the probe plate 140 is rectangular, the auxiliary probes 121 may be arranged at edge positions on two sides or three sides of the probe plate 140 to half-surround the other probes 122, or the auxiliary probes 121 may be arranged at edge positions on four sides of the probe plate 140 to fully surround the other probes 122.

In these embodiments of this disclosure, the auxiliary probes on the probe plate are arranged around the other probes. In the above device, the arrangement of the auxiliary probes around the other probes enables the auxiliary probes to be distributed in a dispersed manner, avoiding error signals caused by uneven stress in a single orientation, thereby improving the reliability of the corresponding formed auxiliary signals.

To improve the accuracy of the alignment between the probes and the bases, in an embodiment, as shown in FIG. 3, the probe bases 130 each include a conductive groove 131, and both the auxiliary probes 121 and the other probes 122 come into contact with the probe bases 130 by being inserted into the corresponding conductive grooves 131.

In some embodiments, the conductive grooves 131 are metal grooves.

The conductive grooves 131 have specifications matching specifications of the conductor parts on the auxiliary probes 121 and the other probes 122 that are used to come into contact with the probe bases 130, so as to accommodate and come into contact with the conductor parts.

For example, as shown in FIG. 3, both the auxiliary probes 121 and the other probes 122 are arranged on the probe plate 140, and the probe bases 130 are arranged on the base plate 150. During an alignment process of the probes and the bases, the probe plate 140 and/or the base plate 150 can be moved so that the auxiliary probes 121 and the other probes 122 are inserted into the corresponding conductive grooves 131 and come into contact with the conductive grooves 131, to achieve aligned contact between the auxiliary probes 121 and the other probes 122 on the probe plate 140 and the probe bases 130 on the base plate 150, thereby forming loops.

In these embodiments of this disclosure, in the provided battery baking device, the probe bases each include a conductive groove, and both the auxiliary probes and the other probes come into contact with the probe bases by being inserted into the corresponding conductive grooves. In the above device, electrical connection between the auxiliary probes and the other probes is achieved through the conductive grooves in the probe bases. Positions of the probes can be accurately locked and controlled in the conductive grooves, reducing the influence of external interference on alignment offset, improving the accuracy of alignment between the probes and the bases, and simultaneously improving the anti-interference capability of the device.

To realize power supply to the probes 120, in an embodiment, as shown in FIG. 4, the above battery baking device 100 further includes a first power source 160 for supplying power to the auxiliary probes 121 and a second power source 170 for supplying power to the other probes 122.

A supply voltage for the first power source 160 is less than a supply voltage for the second power source 170.

As shown in FIG. 4, the first power source 160 is connected to the auxiliary probes 121, and after the auxiliary probes 121 are in aligned contact with the corresponding probe bases 130, auxiliary probe operating circuits are formed. The first power source 160 then supplies power to the auxiliary probes 121 through the auxiliary probe operating circuits. The second power source 170 is connected to the other probes 122, and after the other probes 122 are in aligned contact with the corresponding probe bases 130, other probe operating circuits are formed. The second power source 170 then supplies power to the other probes 122 through the other probe operating circuits.

The controller 110 can control whether to supply power to the auxiliary probes 121 by controlling an on-off state of the auxiliary probe operating circuits. Correspondingly, the controller 110 can control whether to supply power to the other probes 122 by controlling an on-off state of the other probe operating circuits.

In actual application, after receiving a heating instruction, the controller 110 first controls the auxiliary probe operating circuits to be turned on, and supplies power to the auxiliary probes 121 through the first power source 160 with a smaller supply voltage. Then, an electrical signal of the auxiliary probe operating circuits is read to determine an energization state of the auxiliary probes 121. When the auxiliary probes 121 are energized, the other probe operating circuits are controlled to be turned on, and power is supplied to the other probes 122 through the second power source 170 with a larger supply voltage. An electrical signal of the other probe operating circuits can be further read to monitor an energization state of the other probes 122, so as to issue an abnormity alarm in a timely manner when the other probes 122 fail to be energized.

The supply voltage for the first power source 160 is less than the supply voltage for the second power source 170 because the second power source 170 needs to supply power to the other probes 122 to realize functions such as heating and communication, which requires large energy consumption. Whereas, the first power source 160 supplies power to the auxiliary probes 121 only to provide auxiliary signals, which requires small energy consumption. In addition, heat generation of the auxiliary probe operating circuits caused by the larger supply voltage is reduced, and arcing between the probes and between the probes and bases is correspondingly reduced, thereby improving the device safety.

In some embodiments, when the auxiliary probes 121 are energized, the controller 110 may directly issue an abnormity alarm, or may prompt or control the probe plate 140 and/or the base plate 150 to move for alignment, and issues an abnormity alarm when the auxiliary probes 121 still fail to be energized after multiple movements.

In some embodiments, when the other probes 122 are energized, the controller 110 may turn off the auxiliary probe operating circuits, or may continue to keep the auxiliary probe operating circuits on and continue to monitor the energization state of the other probes 122 until the heating task is completed.

In these embodiments of this disclosure, the provided battery baking device further includes a first power source for supplying power to the auxiliary probes and a second power source for supplying power to the other probes; and a supply voltage for the first power source is less than a supply voltage for the second power source. In the above device, the first power source uses a smaller supply voltage to supply power to the auxiliary probes, and the second power source uses a larger supply voltage to supply power to the other probes. This reduces heat generation of the auxiliary probe operating circuits caused by the larger supply voltage while meeting the requirements of different operating circuits, thereby correspondingly reducing arcing between the probes and between the probes and bases, and improving the device safety.

The heating circuit can realize a baking function of the battery baking device 100. Therefore, in an embodiment, at least two probe bases 130 are connected by a heating wire 180, and the two probe bases 130 form a heating circuit after coming into contact with the other probes 122.

The other probes 122 that form the heating circuit may be referred to as heating probes.

For example, the heating wire 180 may be a resistor wire.

After the probes are in aligned contact with the bases, the controller 110 can control a power source to supply power to the other probes 122 (that are, the heating probes) that form the heating circuit. The heating wire in the heating circuit can convert electrical energy into thermal energy, thereby releasing heat to achieve heating and baking functions.

In these embodiments of this disclosure, at least two probe bases are connected by a heating wire, and the at least two probe bases form a heating circuit after coming into contact with the other probes. In the above device, the heating wire is additionally provided between the probe bases to form a heating circuit after the probes are in aligned contact with the bases, providing a baking function without introducing other heating devices, thereby simplifying the overall structure of the device.

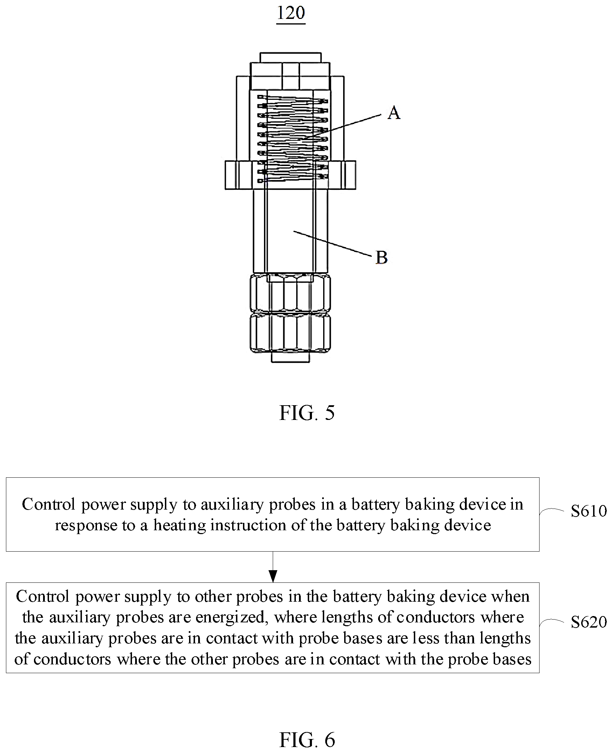

In an embodiment, as shown in FIG. 5, the probe 120 includes a floating structure A and a conductive body B connected to the floating structure A. The floating structure A is configured to drive the conductive body B to extend and retract under an external force; and the conductive body B is configured to come into contact with the probe base 130.

The floating structure A can extend and retract automatically to drive the conductive body B to extend and retract. When the conductive body B has already been in contact with the probe base 130, the floating structure A can be further compressed by an external force to achieve close contact between the conductive body B and the probe bases 130.

For example, the floating structure A may be a spring.

In some embodiments, the auxiliary probes 121 and the other probes 122 may have the same or different structures, but both include a floating structure A and a conductive body B connected to the floating structure A.

After the longer other probes 122 come into contact with the probe bases 130, the floating structures A in the other probes 122 are compressed under a continuous external force, so that the conductive bodies B in the other probes 122 are in close contact with the probe bases 130. In addition, the auxiliary probes 121 on a same probe plate 140 can be driven to move to come into contact with the probe bases 130. The floating structures A in the auxiliary probes 121 are compressed under a continuous external force, so that the conductive bodies B in the auxiliary probes 121 are in close contact with the probe bases 130, and simultaneously the conductive bodies B in the other probes 122 are in closer contact with the probe bases 130.

It should be noted that the probe 120 may further include other structures, such as an insulating sleeve wrapping the floating structure A and a fastening bolt for fastening the probe 120.

In these embodiments of this disclosure, the probes each include a floating structure and a conductive body connected to the floating structure. The floating structure is configured to drive the conductive body to extend and retract under an external force; and the conductive body is configured to come into contact with the probe base. In the above device, the extension and retraction property of the floating structure is utilized to achieve close contact between the probe and the base, which helps to achieve effective contact between the probe and the base, reduces failures caused by poor contact between the probe and the base, and reduces the device failure rate.

Those skilled in the art can understand that the structures shown in FIG. 1 to FIG. 5 are only block diagrams of some structures related to the embodiments of this disclosure, and do not constitute a limitation on an insulation coating detection system to which the embodiments of this disclosure are applied. A specific insulation coating detection system may include more or fewer components than those shown in the figures, or combine some components, or have different component arrangements.

The following introduces in detail a control method for a battery baking device according to an embodiment of this disclosure. The method being applied to the controller in FIG. 1 is used as an example for description. In an embodiment, as shown in FIG. 6, the provided control method for a battery baking device includes the following steps.

S610. Control power supply to auxiliary probes in the battery baking device in response to a heating instruction of the battery baking device.

The heating instruction is used to instruct the battery baking device to realize a heating function.

As shown in FIG. 1, the probes (auxiliary probes and other probes) in the battery baking device and the probe bases can move relative to each other. After the probes are in aligned contact with the probe bases, loops can be formed, and the functions of the corresponding loops can be realized accordingly.

In some embodiments, after the heating instruction is triggered, the controller controls power supply to the auxiliary probes in the battery baking device in response to the heating instruction. The controller can turn on a link between a power source and the auxiliary probes to supply power to the auxiliary probes.

In some embodiments, the heating instruction may be triggered actively or passively. For example, after the alignment of the probes and the bases is completed, an operator may start the battery baking device to actively trigger the heating instruction. Alternatively, the controller may passively trigger the heating instruction after detecting that the probes and the bases are aligned. These embodiments of this disclosure do not impose any specifical limitation on a triggering manner of the heating instruction.

S620. Control power supply to other probes in the battery baking device when the auxiliary probes are energized, where lengths of conductors where the auxiliary probes are in contact with probe bases are less than lengths of conductors where the other probes are in contact with the probe bases.

An energization state of the auxiliary probes is used to characterize whether there is effective contact between the auxiliary probes and the probe bases. When the auxiliary probes are energized, it indicates effective contact between the auxiliary probes and the probe bases. On the contrary, when the auxiliary probes fail to be energized, it indicates that there is no effective contact between the auxiliary probes and the probe bases.

In some embodiments, the controller can acquire the energization state of the auxiliary probes, determine whether the auxiliary probes are energized, and adopt different subsequent control measures. When the auxiliary probes are energized, the controller controls power supply to the other probes in the battery baking device.

For example, when the auxiliary probes fail to be energized, the controller may prompt or control the probes to move relative to the probe bases until the auxiliary probes are energized, or issue an abnormity alarm when the auxiliary probes still fail to be energized after multiple movements.

It should be noted that when the auxiliary probes are energized, it indicates effective contact between the auxiliary probes and the probe bases. Since the lengths of the conductors where the auxiliary probes are in contact with the probe bases are less than the lengths of the conductors where the other probes are in contact with the probe bases, when the shorter auxiliary probes are in effective contact with the probe bases, it indicates that the longer other probes are also in effective contact with the probe bases under pressure. Therefore, when the auxiliary probes are energized, the controller controls power supply to the other probes in the battery baking device.

In these embodiments of this disclosure, by controlling power supply to the auxiliary probes in the battery baking device in response to a heating instruction of the battery baking device, power supply to the other probes in the battery baking device is controlled when the auxiliary probes are energized. The lengths of the conductors where the auxiliary probes are in contact with the probe bases are less than the lengths of the conductors where the other probes are in contact with the probe bases. In the above method, power is first supplied to the auxiliary probes, and then power is supplied to the other probes when the auxiliary probes are energized. Since the lengths of the conductors where the auxiliary probes are in contact with the probe bases are less than the lengths of the conductors where the other probes are in contact with the probe bases, energization of the shorter auxiliary probes indicates effective contact between the auxiliary probes and the probe bases, and the longer other probes are also in effective contact with the probe bases under pressure, thereby reducing failures caused by poor contact between the probes and the bases, reducing the device failure rate, and simultaneously improving the device safety.

In actual application, a supply voltage for the auxiliary probes is different from a supply voltage for the other probes. In an embodiment, the supply voltage for the auxiliary probes is less than the supply voltage for the other probes.

A power source is connected to the auxiliary probes, and after the auxiliary probes are in aligned contact with the corresponding probe bases, auxiliary probe operating circuits are formed. A power source is connected to the other probes, and after the other probes are in aligned contact with the corresponding probe bases, other probe operating circuits are formed.

In some embodiments, the controller may supply power to the auxiliary probes and the other probes through a same power source by providing different supply voltages through different power supply modules in the power source, or may directly supply power to the auxiliary probes and the other probes through different power sources to provide respective required supply voltages for the auxiliary probes and the other probes.

The auxiliary probe operating circuits formed by the auxiliary probes may be used to provide an auxiliary signal that characterizes an energization state of the auxiliary probes. The other probes may include probes with various functions, including not only heating probes for realizing a heating function, but also probes for realizing other functions, such as communication probes for communication with other devices. For example, the probe bases in contact with the heating probes are connected by heating wires and are configured to form heating circuits with the heating probes when the heating probes are energized; and the probe bases in contact with communication probes are connected by communication modules and are configured to form communication circuits with the communication probes when the communication probes are energized.

It should be noted that the supply voltage for the auxiliary probes is less than the supply voltage for the other probes because the other probe operating circuits formed by the other probes are used to realize functions such as heating and communication, which requires large energy consumption. Whereas, the other probe operating circuits formed by the auxiliary probes are only used to provide auxiliary signals, which requires small energy consumption. In addition, heat generation of the auxiliary probe operating circuits caused by the larger supply voltage is reduced.

In these embodiments of this disclosure, the supply voltage for the auxiliary probes is less than the supply voltage for the other probes. In the above method, a smaller supply voltage is used to supply power to the auxiliary probes, and a larger supply voltage is used to supply power to the other probes. This reduces arcing between the probes and between the probes and bases caused by heat generation of the auxiliary probe operating circuits while meeting the requirements of different operating circuits, thereby reducing the device failure rate, and improving the device safety.

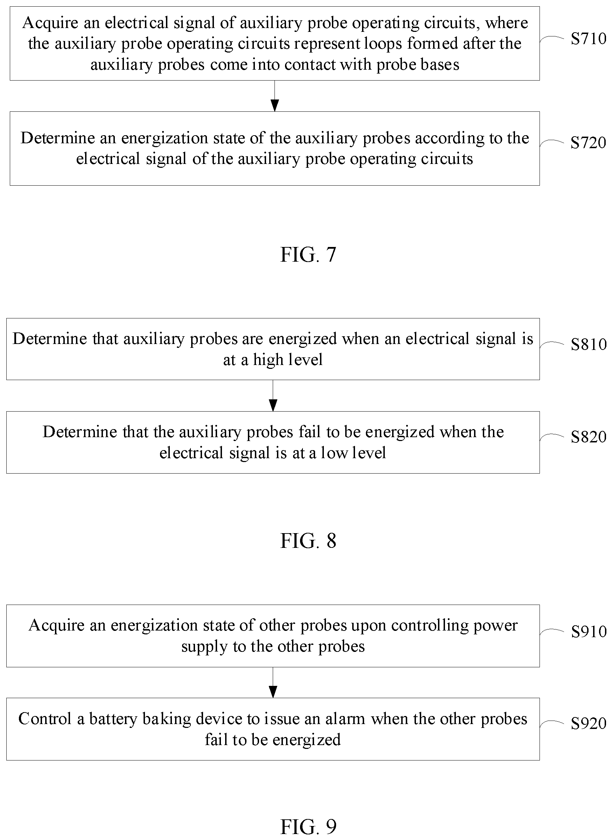

The energization state of the auxiliary probes may be determined based on the auxiliary probe operating circuits formed by the auxiliary probes. In view of this, in an embodiment, as shown in FIG. 7, before the controlling power supply to other probes in the battery baking device in the above S620, the method further includes the following steps.

S710. Acquire an electrical signal of the auxiliary probe operating circuits, where the auxiliary probe operating circuits represent loops formed after the auxiliary probes come into contact with the probe bases.

The electrical signal of the auxiliary probe operating circuits may be used to characterize an operating state of the auxiliary probe operating circuits and may correspondingly characterize the energization state of the auxiliary probes in the auxiliary probe operating circuits.

In some embodiments, after receiving the heating instruction, the controller first controls the auxiliary probe operating circuits to be turned on to acquire the electrical signal of the auxiliary probe operating circuits.

S720. Determine the energization state of the auxiliary probes according to the electrical signal of the auxiliary probe operating circuits.

In some embodiments, after acquiring the electrical signal of the auxiliary probe operating circuits, the controller can determine the energization state of the auxiliary probes based on the electrical signal of the auxiliary probe operating circuits. For example, a correspondence relationship between the electrical signal and the energization state may be preset. The controller may then determine the energization state corresponding to the acquired electrical signal of the auxiliary probe operating circuits based on the correspondence relationship, as the energization state of the auxiliary probes.

In these embodiments of this disclosure, the electrical signal of the auxiliary probe operating circuits is acquired, and the energization state of the auxiliary probes is determined according to the electrical signal of the auxiliary probe operating circuits, where the auxiliary probe operating circuits represent loops formed after the auxiliary probes come into contact with the probe bases. In the above method, the electrical signal of the auxiliary probe operating circuits may be used to characterize the energization state of the auxiliary probes. By acquiring the electrical signal of the auxiliary probe operating circuits before controlling power supply to the other probes in the battery baking device to determine the energization state of the auxiliary probes, the device failure rate caused by directly supplying power to the other probes can be greatly reduced, and the electrical signal is convenient to read, which can correspondingly improve the efficiency.

The electrical signal of the auxiliary probe operating circuits may be at a high level or a low level. In view of this, in an embodiment, as shown in FIG. 8, the above S720 of determining an energization state of the auxiliary probes according to the electrical signal of the auxiliary probe operating circuits includes the following steps.

S810. Determine that the auxiliary probes are energized when the electrical signal is at a high level.

The electrical signal of the auxiliary probe operating circuits being at a high level indicates that the auxiliary probe operating circuits are operating normally. For example, a high level may be represented by a digital signal 1.

In some embodiments, after acquiring that the electrical signal of the auxiliary probe operating circuits is at a high level, the controller can determine that the auxiliary probe operating circuits are operating normally and correspondingly determine that the auxiliary probes are energized.

S820. Determine that the auxiliary probes fail to be energized when the electrical signal is at a low level.

The electrical signal of the auxiliary probe operating circuits being at a low level indicates that the auxiliary probe operating circuits are not operating. For example, a high level may be represented by a digital signal 0.

In some embodiments, after acquiring that the electrical signal of the auxiliary probe operating circuits is at a low level, the controller can determine that the auxiliary probe operating circuits are not operating and correspondingly determine that the auxiliary probes fail to be energized.

In these embodiments of this disclosure, when the electrical signal is at a high level, it is determined that the auxiliary probes are energized; and when the electrical signal is at a low level, it is determined that the auxiliary probes fail to be energized. In the above method, the high level and low level of the auxiliary probe operating circuits can accurately reflect the energization state of the auxiliary probes, and the signal acquisition process is simple and easy to implement, which overall improves the accuracy and high efficiency of determining the energization state of the auxiliary probes.

For a case where the auxiliary probes fail to be energized, in an embodiment, the method further includes:
controlling the battery baking device to issue an alarm when the auxiliary probes fail to be energized.

There are many reasons that cause the auxiliary probes to fail to be energized. For example, the reason may be that the auxiliary probes are not in aligned contact with the probe bases, may be a failure of the auxiliary probes, may be a failure of the probe bases, or the like. No matter which reason causes the auxiliary probes to fail to be energized, it causes certain safety hazards to the entire battery baking device.

In some embodiments, upon determining that the auxiliary probes fail to be energized, the controller can directly control the battery baking device to issue an alarm without supplying power to the other probes, so as to prompt the operator to troubleshoot problems through the alarm.

For example, an alarm method includes but is not limited to sound, light, electricity, or a mixture of various forms. The battery baking device may further communicate with an external device through communication circuits formed by the communication probes, so as to send, under the instruction of the controller, alarm information that the auxiliary probes fail to be energized to the external device. The external device may be a terminal associated with the battery baking device, such as a computer or a mobile phone.

In these embodiments of this disclosure, when the auxiliary probes fail to be energized, the battery baking device is controlled to issue an alarm. In the above method, when the auxiliary probes fail to be energized, an alarm is issued directly, which can prompt operators to troubleshoot problems in a timely manner, thereby improving the orderliness and safety of device operation.

After power is supplied to the other probes, the energization state of the other probes can still be monitored. Therefore, in an embodiment, as shown in FIG. 9, the method further includes the following steps.

S910. Acquire the energization state of the other probes upon controlling power supply to the other probes.

The energization state of the other probes is used to characterize whether there is effective contact between the other probes and the probe bases. When the other probes are energized, it indicates effective contact between the other probes and the probe bases. On the contrary, when the other probes fail to be energized, it indicates that there is no effective contact between the other probes and the probe bases.

In some embodiments, the controller can acquire the energization state of the other probes, determine whether the other probes are energized, and adopt different subsequent control measures.

S920. Control the battery baking device to issue an alarm when the other probes fail to be energized.

In some embodiments, upon determining that the other probes fail to be energized, the controller can directly control the battery baking device to issue an alarm to prompt operators to troubleshoot problems through the alarm.

For example, similar to the case where the auxiliary probes fail to be energized, the alarm method includes but is not limited to sound, light, electricity, or a mixture of various forms. The battery baking device may further communicate with an external device through communication circuits formed by the other probes, so as to send, under the instruction of the controller, alarm information that the other probes fail to be energized to the external device. The external device may be a terminal associated with the battery baking device, such as a computer or a mobile phone.

In these embodiments of this disclosure, the energization state of the other probes is acquired when power supply to the other probes is controlled, so that when the other probes fail to be energized, the battery baking device is controlled to issue an alarm. In the above method, continuous monitoring for the energization state of the other probes is achieved. When the other probes fail to be energized, an alarm is issued directly, which can prompt operators to troubleshoot problems in a timely manner, thereby improving the orderliness and safety of device operation.

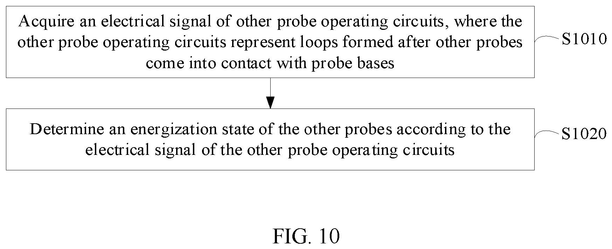

The energization state of the other probes may be determined based on the other probe operating circuits formed by the other probes. In view of this, in an embodiment, as shown in FIG. 10, the acquiring the energization state of the other probes in the above S910 includes the following steps.

S1010. Acquire an electrical signal of the other probe operating circuits, where the other probe operating circuits represent loops formed after the other probes come into contact with the probe bases.

The electrical signal of the other probe operating circuits may be used to characterize an operating state of the other probe operating circuits and may correspondingly characterize the energization state of the other probes in the other probe operating circuits.

In some embodiments, upon determining to supply power to the other probes, the controller can control the other probe operating circuits to be turned on to acquire the electrical signal of the other probe operating circuits. While controlling the other probe operating circuits to be turned on, the controller can control the auxiliary probe operating circuits to be turned off, or can continue to keep the auxiliary probe operating circuits on.

For example, while continuing to keep the auxiliary probe operating circuits on, the controller can continue to monitor the auxiliary probe operating circuits, determine the energization state of the auxiliary probes, and then control the other probe operating circuits to be turned off and stop supplying power to the other probes upon determining that the auxiliary probes fail to be energized.

S1020. Determine the energization state of the other probes according to the electrical signal of the other probe operating circuits.

In some embodiments, after acquiring the electrical signal of the other probe operating circuits, the controller can determine the energization state of the other probes based on the electrical signal of the other probe operating circuits. For example, a correspondence relationship between the electrical signal and the energization state may be preset. The controller may then determine the energization state corresponding to the acquired electrical signal of the other probe operating circuits based on the correspondence relationship, as the energization state of the other probes.

Similar to the auxiliary probe operating circuits, the electrical signal of the other probe operating circuits may be at a high level or a low level. In some embodiments, upon reading that the electrical signal of the other probe operating circuits is at a high level, the controller can determine that the other probe operating circuits are operating normally and correspondingly determine that the other probes are energized. On the contrary, upon reading that the electrical signal of the other probe operating circuits is at a low level, the controller can determine that the other probe operating circuits are not operating and correspondingly determine that the other probes fail to be energized.

In these embodiments of this disclosure, the electrical signal of the other probe operating circuits is acquired, and the energization state of the other probes is determined according to the electrical signal of the other probe operating circuits, where the other probe operating circuits represent loops formed after the other probes come into contact with the probe bases. In the above method, the electrical signal of the other probe operating circuits may be used to characterize the energization state of the other probes. By acquiring the electrical signal of the other probe operating circuits after controlling power supply to the other probes in the battery baking device to determine the energization state of the other probes, continuous monitoring for the battery baking device can be achieved, and the electrical signal is convenient to read, which can correspondingly improve the efficiency.

Before controlling power supply to the auxiliary probes in the battery baking device, the controller is further used to control alignment between the probes and the bases. In an embodiment, the method further includes:
first controlling the other probes to come into contact with probe bases at corresponding positions, and then controlling the auxiliary probes to come into contact with probe bases at corresponding positions.

In some embodiments, the battery baking device may communicate with a transmission device to control the other probes and/or the probe bases through the transmission device so that the other probes come into contact with probe bases at corresponding positions, and to control the auxiliary probes and/or the probe bases through the transmission device so that the auxiliary probes come into contact with probe bases at corresponding positions.

Since the lengths of the conductors where the auxiliary probes are in contact with the probe bases are less than the lengths of the conductors where the other probes are in contact with the probe bases, the controller can first control the other probes to come into contact with probe bases at corresponding positions to achieve preliminary contact between the other probes and the probe bases, and then control the auxiliary probes to come into contact with probe bases at corresponding positions to achieve effective contact between the other probes and the probe bases.

For example, under a condition that the auxiliary probes and the other probes are arranged on the probe plate, and that the probe bases are arranged on the base plate, the controller can control the probe plate to move to a position right above the base plate according to a preset movement program, and make the auxiliary probes and the other probes on the probe plate correspond in position to the probe bases on the base plate. The probe plate is moved down by a first movement distance so that the longer other probes come into contact with the probe bases to achieve preliminary contact between the other probes and the probe bases, and then the probe plate is moved down by a second movement distance so that the shorter auxiliary probes come into contact with the probe bases to achieve effective contact between the other probes and the probe bases. The controller can also control the probe plate to move by a third movement distance at one time until the shorter auxiliary probes come into contact with the probe bases, thereby achieving effective contact between the other probes and the probe bases by one movement.

In these embodiments of this disclosure, before the controlling power supply to auxiliary probes in the battery baking device, the other probes are first controlled to come into contact with probe bases at corresponding positions, and then the auxiliary probes are controlled to come into contact with probe bases at corresponding positions. In the above method, alignment between the probes and the bases is controlled, alignment time is reduced, and control efficiency is correspondingly improved.

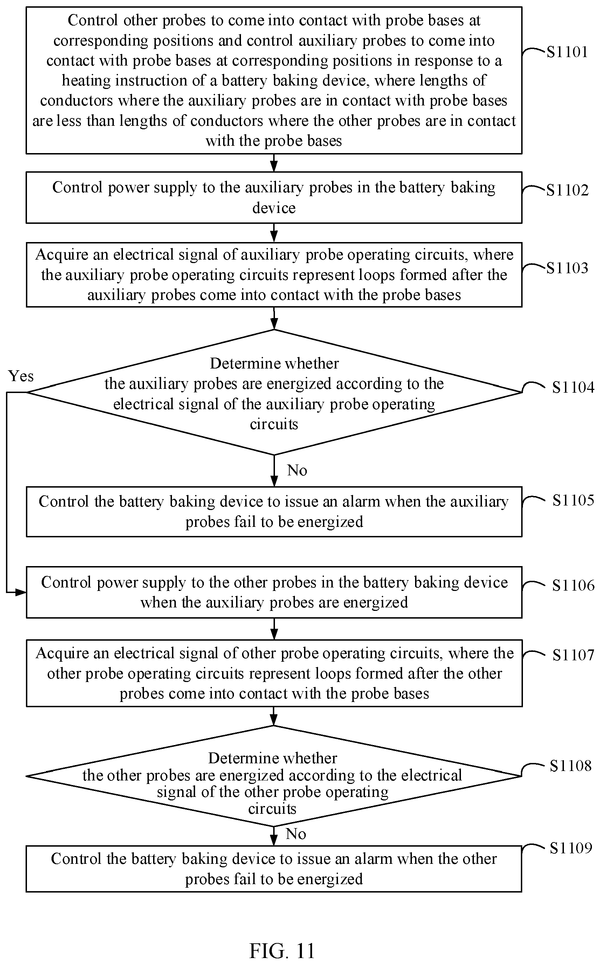

In an embodiment, as shown in FIG. 11, this disclosure further provides a control method for a battery baking device, including the following steps.

S1101. Control other probes to come into contact with probe bases at corresponding positions and control auxiliary probes to come into contact with probe bases at corresponding positions in response to a heating instruction of the battery baking device, where lengths of conductors where the auxiliary probes are in contact with the probe bases are less than lengths of conductors where the other probes are in contact with the probe bases.

S1102. Control power supply to the auxiliary probes in the battery baking device.

S1103. Acquire an electrical signal of auxiliary probe operating circuits, where the auxiliary probe operating circuits represent loops formed after the auxiliary probes come into contact with the probe bases.

S1104. Determine whether the auxiliary probes are energized according to the electrical signal of the auxiliary probe operating circuits.

S1105. Control the battery baking device to issue an alarm when the auxiliary probes fail to be energized.

S1106. Control power supply to the other probes in the battery baking device when the auxiliary probes are energized.

S1107. Acquire an electrical signal of other probe operating circuits, where the other probe operating circuits represent loops formed after the other probes come into contact with the probe bases.

S1108. Determine whether the other probes are energized according to the electrical signal of the other probe operating circuits.

S1109. Control the battery baking device to issue an alarm when the other probes fail to be energized.

For specific processes in the above steps, reference may be made to the relevant steps in the foregoing embodiments, which are not repeated herein.

It should be understood that although the various steps in the flowcharts involved in the above embodiments are shown in sequence according to arrows, these steps are not necessarily executed in an order indicated by the arrows. Unless explicitly stated herein, the execution of these steps is not limited by a strict order, and these steps can be executed in other orders. Moreover, at least some of the steps in the flowcharts involved in the above embodiments may include multiple steps or multiple stages. These steps or stages are not necessarily executed at the same moment, but may be executed at different moments. An execution order of these steps or stages is not necessarily sequential, and they may be performed in turn or alternately with other steps or at least some of the steps or stages in the other steps.

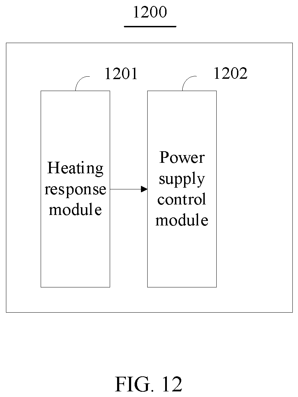

In an embodiment, as shown in FIG. 12, a control apparatus for a battery baking device is provided. The control apparatus 1200 for a battery baking device includes: a heating response module 1201 and a power supply control module 1202.

The heating response module 1201 is configured to control power supply to auxiliary probes in the battery baking device in response to a heating instruction of the battery baking device; and the power supply control module 1202 is configured to control power supply to other probes in the battery baking device when the auxiliary probes are energized. Lengths of conductors where the auxiliary probes are in contact with probe bases are less than lengths of conductors where the other probes are in contact with the probe bases.

In an embodiment, a supply voltage for the auxiliary probes is less than a supply voltage for the other probes.

In an embodiment, the apparatus further includes:
an auxiliary signal module, configured to acquire an electrical signal of auxiliary probe operating circuits, where the auxiliary probe operating circuits represent loops formed after the auxiliary probes come into contact with the probe bases; and
an auxiliary state module, configured to determine an energization state of the auxiliary probes according to the electrical signal of the auxiliary probe operating circuits.

In an embodiment, the auxiliary state module includes:
a first auxiliary submodule, configured to determine that the auxiliary probes are energized when the electrical signal is at a high level; and
a second auxiliary submodule, configured to determine that the auxiliary probes fail to be energized when the electrical signal is at a low level.

In an embodiment, the apparatus further includes:
a first abnormity alarming module, configured to control the battery baking device to issue an alarm when the auxiliary probes fail to be energized.

In an embodiment, the apparatus further includes:
other state modules, configured to acquire an energization state of the other probes upon controlling power supply to the other probes; and
a second abnormity alarming module, configured to issue an abnormity alarm when the other probes fail to be energized.

In an embodiment, the other state modules include:
a signal submodule, configured to acquire an electrical signal of the other probe operating circuits, where the other probe operating circuits represent loops formed after the other probes come into contact with the probe bases; and
a state submodule, configured to determine the energization state of the other probes according to the electrical signal of the other probe operating circuits.

In an embodiment, the apparatus further includes:
an alignment control module, configured to first control the other probes to come into contact with probe bases at corresponding positions, and then control the auxiliary probes to come into contact with probe bases at corresponding positions.

The modules in the above control apparatus for a battery baking device can be implemented in whole or in part by software, hardware, and combinations thereof. The above modules can be embedded in or independent of a processor in a computer device in the form of hardware, or stored in a memory in the computer device in the form of software, so that the processor can call and execute operations corresponding to the above modules.

In an embodiment, a computer device is provided, including a memory and a processor, where the memory stores a computer program, and the processor implements the following steps when executing the computer program:
controlling power supply to auxiliary probes in the battery baking device in response to a heating instruction of the battery baking device; and controlling power supply to other probes in the battery baking device when the auxiliary probes are energized, where lengths of conductors where the auxiliary probes are in contact with probe bases are less than lengths of conductors where the other probes are in contact with the probe bases.

In an embodiment, a supply voltage for the auxiliary probes is less than a supply voltage for the other probes.

In an embodiment, the processor further implements the following steps when executing the computer program:
acquiring an electrical signal of auxiliary probe operating circuits, where the auxiliary probe operating circuits represent loops formed after the auxiliary probes come into contact with the probe bases; and determining an energization state of the auxiliary probes according to the electrical signal of the auxiliary probe operating circuits.

In an embodiment, the processor further implements the following steps when executing the computer program:
determining that the auxiliary probes are energized when the electrical signal is at a high level; and determining that the auxiliary probes fail to be energized when the electrical signal is at a low level.

In an embodiment, the processor further implements the following steps when executing the computer program:
controlling the battery baking device to issue an alarm when the auxiliary probes fail to be energized.

In an embodiment, the processor further implements the following steps when executing the computer program:
acquiring an energization state of the other probes upon controlling power supply to the other probes; and controlling the battery baking device to issue an alarm when the other probes fail to be energized.

In an embodiment, the processor further implements the following steps when executing the computer program:
acquiring an electrical signal of other probe operating circuits, where the other probe operating circuits represent loops formed after the other probes come into contact with the probe bases; and determining the energization state of the other probes according to the electrical signal of the other probe operating circuits.

In an embodiment, the processor further implements the following steps when executing the computer program:
first controlling the other probes to come into contact with probe bases at corresponding positions, and then controlling the auxiliary probes to come into contact with probe bases at corresponding positions.

In an embodiment, a computer-readable storage medium is provided, where a computer program is stored thereon, and the computer program implements the following steps when executed by a processor:
controlling power supply to auxiliary probes in the battery baking device in response to a heating instruction of the battery baking device; and controlling power supply to other probes in the battery baking device when the auxiliary probes are energized, where lengths of conductors where the auxiliary probes are in contact with probe bases are less than lengths of conductors where the other probes are in contact with the probe bases.

In an embodiment, a supply voltage for the auxiliary probes is less than a supply voltage for the other probes.

In an embodiment, the computer program further implements the following steps when executed by the processor:
acquiring an electrical signal of auxiliary probe operating circuits, where the auxiliary probe operating circuits represent loops formed after the auxiliary probes come into contact with the probe bases; and determining an energization state of the auxiliary probes according to the electrical signal of the auxiliary probe operating circuits.

In an embodiment, the computer program further implements the following steps when executed by the processor:
determining that the auxiliary probes are energized when the electrical signal is at a high level; and determining that the auxiliary probes fail to be energized when the electrical signal is at a low level.

In an embodiment, the computer program further implements the following steps when executed by the processor:
controlling the battery baking device to issue an abnormity alarm when the auxiliary probes fail to be energized.

In an embodiment, the computer program further implements the following steps when executed by the processor:
acquiring an energization state of the other probes upon controlling power supply to the other probes; and controlling the battery baking device to issue an alarm when the other probes fail to be energized.

In an embodiment, the computer program further implements the following steps when executed by the processor:
acquiring an electrical signal of other probe operating circuits, where the other probe operating circuits represent loops formed after the other probes come into contact with the probe bases; and determining the energization state of the other probes according to the electrical signal of the other probe operating circuits.

In an embodiment, the computer program further implements the following steps when executed by the processor:
first controlling the other probes to come into contact with probe bases at corresponding positions, and then controlling the auxiliary probes to come into contact with probe bases at corresponding positions.

In an embodiment, a computer program product is provided, including a computer program, where the computer program implements the following steps when executed by a processor:
controlling power supply to auxiliary probes in the battery baking device in response to a heating instruction of the battery baking device; and controlling power supply to other probes in the battery baking device when the auxiliary probes are energized, where lengths of conductors where the auxiliary probes are in contact with probe bases are less than lengths of conductors where the other probes are in contact with the probe bases.

In an embodiment, a supply voltage for the auxiliary probes is less than a supply voltage for the other probes.

In an embodiment, the computer program further implements the following steps when executed by the processor:
acquiring an electrical signal of auxiliary probe operating circuits, where the auxiliary probe operating circuits represent loops formed after the auxiliary probes come into contact with the probe bases; and determining an energization state of the auxiliary probes according to the electrical signal of the auxiliary probe operating circuits.

In an embodiment, the computer program further implements the following steps when executed by the processor:
determining that the auxiliary probes are energized when the electrical signal is at a high level; and determining that the auxiliary probes fail to be energized when the electrical signal is at a low level.

In an embodiment, the computer program further implements the following steps when executed by the processor:
controlling the battery baking device to issue an alarm when the auxiliary probes fail to be energized.

In an embodiment, the computer program further implements the following steps when executed by the processor:
acquiring an energization state of the other probes upon controlling power supply to the other probes; and controlling the battery baking device to issue an alarm when the other probes fail to be energized.

In an embodiment, the computer program further implements the following steps when executed by the processor:
acquiring an electrical signal of other probe operating circuits, where the other probe operating circuits represent loops formed after the other probes come into contact with the probe bases; and determining the energization state of the other probes according to the electrical signal of the other probe operating circuits.

In an embodiment, the computer program further implements the following steps when executed by the processor:
first controlling the other probes to come into contact with probe bases at corresponding positions, and then controlling the auxiliary probes to come into contact with probe bases at corresponding positions.

Those of ordinary skill in the art can understand that all or some of the processes in the methods of the above embodiments can be implemented by instructing relevant hardware through a computer program. The computer program can be stored in a non-volatile computer-readable storage medium. When the computer program is executed, it may include the processes of the embodiments of the above methods. Any reference to memory, database, or other media used in the embodiments provided in this disclosure may include at least one of non-volatile memory and volatile memory. Non-volatile memory may include read-only memory (Read-Only Memory, ROM), magnetic tape, floppy disk, flash memory, optical memory, high-density embedded non-volatile memory, resistive random access memory (ReRAM), magnetoresistive random access memory (Magnetoresistive Random Access Memory, MRAM), ferroelectric random access memory (Ferroelectric Random Access Memory, FRAM), phase change memory (Phase Change Memory, PCM), graphene memory, and the like. Volatile memory may include random access memory (Random Access Memory, RAM), external cache memory, or the like. As an illustration rather than a limitation, RAM may be in various forms, such as static random access memory (Static Random Access Memory, SRAM) or dynamic random access memory (Dynamic Random Access Memory, DRAM). The database involved in the embodiments provided in this disclosure may include at least one of relational database and non-relational database. Non-relational database may include blockchain-based distributed database and the like, but is not limited thereto. The processor involved in the embodiments provided in this disclosure may be a general-purpose processor, a central processing unit, a graphics processing unit, a digital signal processor, a programmable logic device, a data processing logic device based on quantum computing, or the like, but is not limited thereto.

The technical features of the above embodiments can be combined in any manner. To make the description concise, not all possible combinations of the technical features in the above embodiments are described. However, as long as there is no contradiction in the combinations of these technical features, they should all be considered to fall within the scope recorded in this specification.

The above embodiments only express several implementations of this disclosure. The descriptions are relatively specific and detailed, but they should not be construed as limiting the patent scope of this disclosure. It should be pointed out that for those of ordinary skill in the art, several variations and improvements can be made without departing from the concept of this disclosure, and these all fall within the protection scope of this disclosure. Therefore, the protection scope of this disclosure shall be subject to the appended claims.

## Claims

1. A battery baking device, wherein the battery baking device comprises a controller, probes, and probe bases corresponding to the probes; the probes comprise auxiliary probes and other probes; the auxiliary probes are configured to come into contact with the probe bases to form auxiliary probe operating circuits; and the other probes are configured to come into contact with the probe bases to form other probe operating circuits; and
the controller is configured to control power supply to the auxiliary probes in the battery baking device based on a heating instruction, and control power supply to the other probes in the battery baking device when the auxiliary probes are energized; lengths of conductors where the auxiliary probes are in contact with the probe bases are less than lengths of conductors where the other probes are in contact with the probe bases.

2. The battery baking device according to claim 1, wherein the battery baking device further comprises: a probe plate and a base plate; both the auxiliary probes and the other probes are arranged on the probe plate; and the probe bases are arranged on the base plate.

3. The battery baking device according to claim 2, wherein the auxiliary probes and the other probes penetrate through the probe plate and are fixed to the probe plate.

4. The battery baking device according to claim 3, wherein the auxiliary probes and the other probes each comprise two conductor parts located on two sides of the probe plate, which are a conductor part in contact with the probe base and a conductor part not in contact with the probe base, and the conductor part not in contact with the probe base is electrically connected to the controller and other devices.

5. The battery baking device according to any one of claims 2 to 4, wherein the auxiliary probes are arranged at edge positions of the probe plate; and the other probes are arranged at a central position of the probe plate.

6. The battery baking device according to claim 5, wherein the auxiliary probes on the probe plate are arranged around the other probes.

7. The battery baking device according to claim 6, wherein the probe plate is rectangular, and the auxiliary probes are arranged at edge positions on four sides of the probe plate.

8. The battery baking device according to any one of claims 1 to 7, wherein the probe bases each comprise a conductive groove, and both the auxiliary probes and the other probes come into contact with the probe bases by being inserted into the corresponding conductive grooves.

9. The battery baking device according to any one of claims 1 to 7, wherein the battery baking device further comprises a first power source for supplying power to the auxiliary probes and a second power source for supplying power to the other probes; and a supply voltage for the first power source is less than a supply voltage for the second power source.

10. The battery baking device according to any one of claims 1 to 7, wherein at least two probe bases are connected by a heating wire, and the at least two probe bases form a heating circuit after coming into contact with the other probes.

11. The battery baking device according to any one of claims 1 to 7, wherein the probes each comprise a floating structure and a conductive body connected to the floating structure; the floating structure is configured to drive the conductive body to extend and retract under an external force; and the conductive body is configured to come into contact with the probe base.

12. The battery baking device according to claim 11, wherein the floating structure comprises a spring.

13. A control method for a battery baking device, wherein the method comprises:
controlling power supply to auxiliary probes in the battery baking device in response to a heating instruction of the battery baking device; and
controlling power supply to other probes in the battery baking device when the auxiliary probes are energized, wherein lengths of conductors where the auxiliary probes are in contact with probe bases are less than lengths of conductors where the other probes are in contact with the probe bases.

14. The method according to claim 13, wherein a supply voltage for the auxiliary probes is less than a supply voltage for the other probes.

15. The method according to claim 13 or 14, wherein before the controlling power supply to other probes in the battery baking device, the method further comprises:
acquiring an electrical signal of auxiliary probe operating circuits, wherein the auxiliary probe operating circuits represent loops formed after the auxiliary probes come into contact with the probe bases; and
determining an energization state of the auxiliary probes according to the electrical signal of the auxiliary probe operating circuits.

16. The method according to claim 15, wherein the determining an energization state of the auxiliary probes according to the electrical signal of the auxiliary probe operating circuits comprises:
determining that the auxiliary probes are energized when the electrical signal is at a high level; and
determining that the auxiliary probes fail to be energized when the electrical signal is at a low level.

17. The method according to claim 13 or 14, wherein the method further comprises:
controlling the battery baking device to issue an alarm when the auxiliary probes fail to be energized.

18. The method according to claim 13 or 14, wherein the method further comprises:
acquiring an energization state of the other probes upon the control on the power supply to the other probes; and
controlling the battery baking device to issue an alarm when the other probes fail to be energized.

19. The method according to claim 18, wherein the acquiring an energization state of the other probes comprises:
acquiring an electrical signal of other probe operating circuits, wherein the other probe operating circuits represent loops formed after the other probes come into contact with the probe bases; and
determining the energization state of the other probes according to the electrical signal of the other probe operating circuits.

20. The method according to claim 13 or 14, wherein before the controlling power supply to auxiliary probes in the battery baking device, the method further comprises:
first controlling the other probes to come into contact with probe bases at corresponding positions, and then controlling the auxiliary probes to come into contact with probe bases at corresponding positions.
